(19) Europäisches Patentamt
European Patent Office
Office européen des brevets

(11) EP 4 407 636 A1

(12) **EUROPEAN PATENT APPLICATION**
published in accordance with Art. 153(4) EPC

(43) Date of publication:
**31.07.2024 Bulletin 2024/31**

(21) Application number: **22872750.9**

(22) Date of filing: **12.09.2022**

(51) International Patent Classification (IPC):
***H01B 1/06*** *(2006.01)* ***H01B 13/00*** *(2006.01)*
***H01M 6/18*** *(2006.01)* ***H01M 10/056*** *(2010.01)*

(52) Cooperative Patent Classification (CPC):
**H01B 1/06; H01B 13/00; H01M 6/18; H01M 10/056;**
Y02E 60/10

(86) International application number:
**PCT/JP2022/034001**

(87) International publication number:
**WO 2023/047996 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2021 JP 2021153549**

(71) Applicant: **LINTEC Corporation**
**Tokyo 173-0001 (JP)**

(72) Inventors:
- **HASHIMOTO, Sae**
**Tokyo 173-0001 (JP)**
- **MORIOKA, Takashi**
**Tokyo 173-0001 (JP)**

(74) Representative: **Gille Hrabal Partnerschaftsgesellschaft mbB**
**Patentanwälte**
**Brucknerstraße 20**
**40593 Düsseldorf (DE)**

(54) **SOLID ELECTROLYTE, PRODUCTION METHOD FOR SOLID ELECTROLYTE, AND BATTERY**

(57) A solid electrolyte contains: an electrolyte solution containing a lithium salt and a carbonate solvent; metal oxide particles; and an ion conductive polymer. The ion conductive polymer contains a cross-linked product of a cross-linked polyether. Assuming that a total content of the electrolyte solution and the ion conductive polymer is 100 mass%, a content of the electrolyte solution is in a range from 87 mass% to 93 mass% and a content of the ion conductive polymer is in a range from 7 mass% to 13 mass%.

EP 4 407 636 A1

**Description**

TECHNICAL FIELD

The present invention relates to a solid electrolyte, a manufacturing method of the solid electrolyte, and a battery.

BACKGROUND ART

Unlike an electrolyte solution, a solid electrolyte is in no danger of liquid leakage and is able to form into a lightweight and flexible electrolyte membrane. The solid electrolyte is thus expected to be used, for instance, in a secondary battery including a lithium ion or the like. For instance, Patent Literature 1 proposes a quasi-solid electrolyte containing a metal oxide and an ion conductive material and in which a specific ion conductive material is supported on metal oxide particles.

Further, Patent Literature 2 proposes a gel-like electrolyte provided by impregnating a composition containing a cross-linked polyalkylene oxide and an inorganic oxide with a non-aqueous electrolyte solution containing an inorganic electrolyte and a non-aqueous organic solvent. This cross-linked polyalkylene oxide is obtained by reacting an isocyanate compound with a polyalkylene oxide having a mass average molecular weight ranging from 1,000 to 1,000,000.

CITATION LIST

PATENT LITERATURE(S)

Patent Literature 1: JP 2017-059432 A
Patent Literature 2: JP H06-140052 A

SUMMARY OF THE INVENTION

PROBLEM(S) TO BE SOLVED BY THE INVENTION

The quasi-solid electrolyte described in Patent Literature 1 contains, as an ion conductive material, a mixture of a lithium salt containing lithium-bis(fluorosulfonyl)imide and one of glymes and N,N-diethyl-N-methyl-N-(2-methoxyethyl)ammonium bis(trifluoromethane sulfonyl)imide. The ion conductive material is an electrolyte solution of an ionic liquid system. However, the solid electrolyte using the electrolyte solution of the ionic liquid system is insufficient in terms of properties such as lithium-ion transport number. Further, under severer use conditions, the solid electrolyte using the electrolyte solution of the ionic liquid system is insufficient in terms of properties such as stability to lithium metal. Thus, there is a demand for further improvement in properties of the solid electrolyte such as more stable cyclic charging and discharging performance.

Furthermore, assuming that the manufacturing method of the gel-like electrolyte described in Patent Literature 2 is applied to an electrolyte solution with a high lithium salt concentration. In this case, the composition containing the cross-linked polyalkylene oxide and the inorganic oxide cannot be impregnated with the electrolyte solution due to its high viscosity. In other words, in the gel-like electrolyte described in Patent Literature 2, the lithium salt concentration in the electrolyte solution cannot be increased and the properties such as stability to lithium metal is insufficient.

An object of the invention is to provide a solid electrolyte that is excellent in lithium-ion transport number, ion conductivity, and stability to lithium metal, a manufacturing method of the solid electrolyte, and a battery including the solid electrolyte.

MEANS FOR SOLVING THE PROBLEM(S)

[1] A solid electrolyte containing: an electrolyte solution that contains a lithium salt and a carbonate solvent; metal oxide particles; and an ion conductive polymer, in which the ion conductive polymer contains a cross-linked product of a cross-linked polyether, and assuming that a total content of the electrolyte solution and the ion conductive polymer is 100 mass%, a content of the electrolyte solution is in a range from 87 mass% to 93 mass% and a content of the ion conductive polymer is in a range from 7 mass% to 13 mass%.

[2] The solid electrolyte according to [1], in which a molar ratio of the lithium salt to the carbonate solvent (lithium

salt/carbonate solvent) in the electrolyte solution is in a range from 1/4 to 1/1.

[3] The solid electrolyte according to [1] or [2], in which assuming that the total content of the electrolyte solution and the ion conductive polymer is 100 parts by mass, a content of the metal oxide particles is in a range from 3 parts by mass to 30 parts by mass.

[4] The solid electrolyte according to any one of [1] to [3], in which the lithium salt is at least one selected from the group consisting of lithium-bis(fluorosulfonyl)imide and lithium borofluoride.

[5] The solid electrolyte according to any one of [1] to [4], in which the carbonate solvent is at least one selected from the group consisting of dimethyl carbonate and propylene carbonate.

[6] The solid electrolyte according to any one of [1] to [5], in which the metal oxide particles are silica particles.

[7] The solid electrolyte according to any one of [1] to [6], in which a specific surface area of the metal oxide particles measured by a BET method is in a range from 160 $m^2/g$ to 700 $m^2/g$.

[8] A battery including the solid electrolyte according to any one of [1] to [7].

[9] A manufacturing method of a solid electrolyte, the method including: mixing an electrolyte solution, metal oxide particles, a cross-linked polyether, and a photopolymerization initiator to prepare a mixture; molding the mixture to produce a molded product; and irradiating the molded product with ultraviolet rays to produce a solid electrolyte that contains an ion conductive polymer produced by cross-linking the cross-linked polyether, in which the electrolyte solution contains a lithium salt and a carbonate solvent, the solid electrolyte contains the electrolyte solution, the metal oxide particles, and the ion conductive polymer, and assuming that a total content of the electrolyte solution and the ion conductive polymer is 100 mass%, a content of the electrolyte solution is in a range from 87 mass% to 93 mass% and a content of the ion conductive polymer is in a range from 7 mass% to 13 mass%.

According to the above aspects of the invention, there are provided a solid electrolyte that is excellent in a lithium-ion transport number, ion conductivity, and stability to lithium metal, a manufacturing method of the solid electrolyte, and a battery including the solid electrolyte.

DESCRIPTION OF EMBODIMENT(S)

The invention will be described below with reference to exemplary embodiment(s). The scope of the invention is not limited to the disclosures of the exemplary embodiment(s).

Solid Electrolyte

A solid electrolyte according to the present exemplary embodiment will be described below.

The solid electrolyte according to the present exemplary embodiment contains an electrolyte solution containing a lithium salt and a carbonate solvent, metal oxide particles, and an ion conductive polymer. The ion conductive polymer contains a cross-linked product of a cross-linked polyether. In the solid electrolyte according to the present exemplary embodiment, assuming that a total content of the electrolyte solution and the ion conductive polymer is 100 mass%, the content of the electrolyte solution is in a range from 87 mass% to 93 mass% and the content of the ion conductive polymer is in a range from 7 mass% to 13 mass%. The solid electrolyte according to the present exemplary embodiment can be easily formed into a membrane and can exhibit excellent lithium-ion transport number, ion conductivity, and stability to lithium metal. The reason thereof is speculated as follows.

The solid electrolyte according to the present exemplary embodiment contains the electrolyte solution, the metal oxide particles, and the ion conductive polymer, which improves thixotropic properties of the electrolyte solution (hereinafter occasionally referred to as thixotropy). Further, the ion conductive polymer contains the cross-linked product of the cross-linked polyether, and thus a predetermined amount of ion conductive polymer further enhances thixotropy. The mixture containing a metal oxide and the electrolyte solution can thus be formed into a membrane. The electrolyte that can be formed into a membrane is capable of inhibiting leakage of the electrolyte solution while inhibiting decrease in ion conductivity of the electrolyte solution. Further, since the cross-linked polyether contained in the ion conductive polymer is not cross-linked at the time of producing the solid electrolyte, the ion conductive polymer exhibits excellent fluidity at the time of producing the solid electrolyte. The lithium salt concentration in the electrolyte solution can thus be increased. It is thus believed that the solid electrolyte according to the present exemplary embodiment exhibits excellent lithium-ion transport number, ion conductivity, and stability to lithium metal.

Electrolyte Solution

The electrolyte solution according to the present exemplary embodiment can be produced by containing a lithium salt and a carbonate solvent therein.

Lithium Salt

Specific examples of the lithium salt according to the present exemplary embodiment include lithium hexafluorophosphate ($LiPF_6$), lithium bis(trifluoromethanesulfonyl)imide (LiTFSI), lithium-bis(fluorosulfonyl)imide (LiFSI), lithium 2-trifluoromethyl-4,5-dicyanoimidazolate (LiTDI), lithium 4,5-dicyano-1,2,3-triazolate (LiDCTA), lithium-bis(pentafluoroethylsulfonyl)imide (LiBETI), lithium borofluoride ($LiBF_4$), lithium-bis(oxalato)borate (LiBOB), lithium nitrate (LiNOs), lithium chloride (LiCl), lithium bromide (LiBr), and lithium fluoride (LiF).

Among the above examples, in terms of easily producing a solid electrolyte that exhibits excellent lithium-ion transport number, ion conductivity, and stability to lithium metal, the lithium salt is preferably at least one selected from lithium-bis(fluorosulfonyl)imide and lithium borofluoride. For the lithium salt, one of lithium-bis(fluorosulfonyl)imide (LiFSI) and lithium borofluoride ($LiBF_4$) may be used alone, or two of them may be used in combination. The lithium salt in the solid electrolyte may be present as lithium metal cations and counterions to the cations. Using these lithium salts further improves, especially, the stability to lithium metal.

Carbonate Solvent

Specific examples of the carbonate solvent according to the present exemplary embodiment include dimethyl carbonate (DMC), diethyl carbonate (DEC), ethylmethyl carbonate (EMC), dipropyl carbonate (DPC), methylpropyl carbonate (MPC), ethylpropyl carbonate (EPC), ethylene carbonate (EC), propylene carbonate (PC), and butylene carbonate (BC). Among the above examples, in terms of easily producing a solid electrolyte that exhibits excellent lithium-ion transport number, ion conductivity, and stability to lithium metal, the carbonate solvent is preferably at least one selected from dimethyl carbonate and propylene carbonate. For the carbonate solvent, one of dimethyl carbonate (DMC) and propylene carbonate (PC) may be used alone, or two of them may be used in combination. Here, the carbonate solvent in the exemplary embodiment refers to a compound having a carbonate skeleton in a molecular structure.

Molar Ratio between Lithium Salt and Carbonate Solvent

In the electrolyte solution according to the present exemplary embodiment, the molar ratio of the lithium salt to the carbonate solvent (lithium salt/carbonate solvent) is preferably in a range from 1/4 to 1/1. At a molar ratio of 1/4 or more, the stability to a lithium metal is likely to be improved. At a molar ratio of 1/1 or less, the lithium salt is likely to be dissolved in the carbonate solvent. In terms of easily producing the solid electrolyte having excellent lithium-ion transport number, ion conductivity, and stability to lithium metal, the molar ratio may be in a range from 1/3 to 1/1 or in a range from 1/2 to 1/1.

Though the reason thereof is not clearly known, the electrolyte solution according to the present exemplary embodiment, which is a combination of the lithium salt that is at least one selected from lithium-bis(fluorosulfonyl)imide and lithium borofluoride and the carbonate solvent that is at least one selected from dimethyl carbonate and propylene carbonate, exhibits more excellent stability to lithium metal than electrolyte solutions each of which is a combination of any other lithium salt than the above lithium salt(s) and any other carbonate solvent than the above carbonate solvent(s). Further, in the electrolyte solution that is a combination of the lithium salt that is at least one selected from lithium-bis(fluorosulfonyl)imide and lithium borofluoride and the carbonate solvent that is at least one selected from dimethyl carbonate and propylene carbonate, the content (molar ratio) of the lithium salt to the carbonate solvent may be in a range from 1/4 to 1/1. In this case, the stability to lithium metal is more stable.

Ion Conductive Polymer

The ion conductive polymer according to the present exemplary embodiment contains a cross-linked product of a cross-linked polyether. Herein, the cross-linked product of the cross-linked polyether is produced by reacting (cross-linking) reactive groups at side chains of the cross-linked polyether.

The cross-linked polyether according to the present exemplary embodiment is a polyether having a reactive group(s) at a side chain(s) thereof. Polyether refers to a chain polymer having an ether bond in a main chain thereof.

Examples of the reactive group include an allyl group, acryloyl group, and methacryloyl group.

Examples of the constituent unit of the cross-linked polyether include constituent units represented by formulae (1) to (5) below.

[Formula 1]

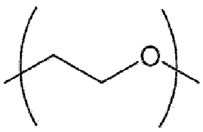

(1)

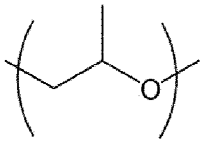

(2)

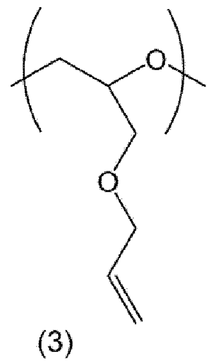

(3)

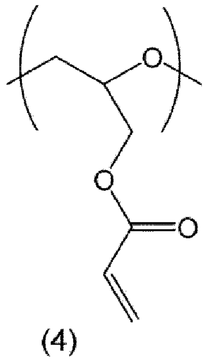

(4)

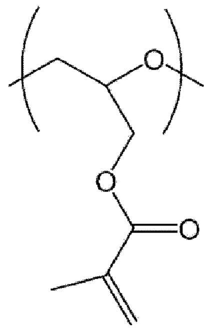

(5)

The cross-linked polyether may be a polyether having a single constituent unit or a polyether having a plurality of constituent units. The number of the type of constituent units is not particularly limited, and only has to be one or more. Since the cross-linked polyether in the present exemplary embodiment has a reactive group in a side chain thereof, the cross-linked polyether preferably has at least one of the constituent units represented by the formulae (3) to (5).

Examples of the cross-linked polyether include a polyether represented by a formula (6) below.

[Formula 2]

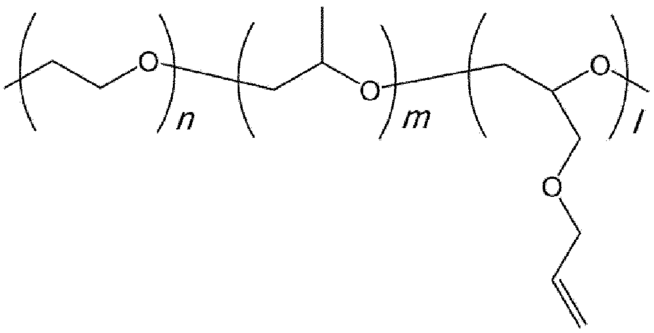

(6)

In the above formula (6), n, m, and l are not particularly limited. For instance, assuming that the sum of n, m, and l is 100, n is preferably in a range from 50 to 98, m is preferably in a range from 1 to 40, and l is preferably in a range from 1 to 40.

In the present exemplary embodiment, assuming that the total content of the electrolyte solution and the ion conductive polymer is 100 mass%, it is necessary that the content of the electrolyte solution is in a range from 87 mass% to 93 mass% and the content of the ion conductive polymer is in a range from 7 mass% to 13 mass%.

When the content of the ion conductive polymer is less than 7 mass%, it is difficult for the solid electrolyte to be formed into a membrane. When the content of the ion conductive polymer exceeds 13 mass%, at least one of the lithium-ion transport number or the ion conductivity is insufficient. Further, in terms of easily providing a membrane from the solid electrolyte, the content of the ion conductive polymer is preferably 8 mass% or more, more preferably 9 mass% or more. In terms of the improvement in the lithium-ion transport number and ion conductivity, the content of the ion conductive polymer is preferably 12 mass% or less, more preferably 11 mass% or less.

Photopolymerization Initiator

A photopolymerization initiator is preferably used in the solid electrolyte according to the present exemplary embodiment in order to produce the cross-linked product of the cross-linked polyether. In the solid electrolyte according to the present exemplary embodiment, the cross-linked product of the cross-linked polyether is produced by reacting (cross-linking) reactive groups at side chains of the cross-linked polyether.

The photopolymerization initiator is not particularly limited, and exemplified by known compounds usable to react the cross-linked polyether and the like. The photopolymerization initiator is preferably an ultraviolet-sensitive photopolymerization initiator. One type of the photopolymerization initiator may be used alone, or two or more types of the photopolymerization initiator may be used in combination.

Specific examples of the photopolymerization initiator include: α-ketol compounds such as 4-(2-hydroxyethoxy)phenyl(2-hydroxy-2-propyl)ketone, α-hydroxy-α,α'-dimethylacetophenone, 2-methyl-2-hydroxy propiophenone, and 1-hydroxycyclohexylphenylketone; acetophenone compounds such as methoxyacetophenone, 2,2-dimethoxy-2-phenylacetophenone, 2,2-diethoxyacetophenone, and 2-methyl-1-[4-(methylthio)-phenyl]-2-morpholinopropane-1; benzoinether compounds such as benzoinethylether, benzoinisopropylether, and anisoinmethylether; ketal compounds such as benzyldimethylketal; aromatic sulfonylchloride compounds such as 2-naphthalenesulfonylchloride; photoactive oxime compounds such as 1-phenone-1, and 1-propanedione-2-(o-ethoxycarbonyl)oxime; benzophenone compounds such as benzophenone, benzoyl benzoate, 3,3'-dimethyl-4-methoxybenzophenone; thioxanthone compounds such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone; halogenated ketone; acylphosphinoxide; acylphosphonate; and oligo[2-hydroxy2-methyl-1-(4-(1-methylvinyl)phenyl)propanone].

The content of the photopolymerization initiator is preferably in a range from 0.1 parts by mass to 10 parts by mass with respect to 100 parts by mass of the ion conductive polymer.

Metal Oxide Particles

The solid electrolyte according to the present exemplary embodiment contains metal oxide particles. In the solid electrolyte according to the present exemplary embodiment that contains the electrolyte solution and the metal oxide particles, the electrolyte solution is supported on the metal oxide particles. Here, the term "supported" in the present exemplary embodiment refers to a state where at least a part of the metal oxide particle surfaces is covered with the electrolyte solution.

In terms of easily providing a membrane from the solid electrolyte, a specific surface area of the metal oxide particles measured by BET method is preferably in a range from 160 $m^2/g$ to 700 $m^2/g$. When the specific surface area (measured by BET method) of the metal oxide particles is 160 $m^2/g$ or more, thixotropy is easily improvable, so that a membrane of a mixture containing the metal oxide particles, the electrolyte solution, and the like (i.e., the solid electrolyte) can be easily formed. When the specific surface area (measured by BET method) is 700 $m^2/g$ or less, the metal oxide particles are efficiently mixed with the electrolyte solution, so that a membrane of the solid electrolyte can be easily formed. In terms of more easily providing a membrane from the solid electrolyte, the specific surface area (measured by BET method) of the metal oxide particles is more preferably 165 $m^2/g$ or more, still more preferably 170 $m^2/g$ or more. For the same reason, the specific surface area is more preferably 600 $m^2/g$ or less, still more preferably 520 $m^2/g$ or less. Herein, the BET method refers to a method for adsorbing gas molecules (typically nitrogen gas) on solid particles to measure a specific surface area of the solid particles based on the amount of adsorbed gas particles. A variety of BET measurement devices are usable to measure the specific surface area.

For the metal oxide particles, one type of the metal oxide particles providing the above-described specific surface area may be used alone or two or more types of the metal oxide particles different in specific surface area may be used in combination. Examples of the type of the metal oxide particles, which are not particularly limited, include silica particles, alumina particles, zirconia particles, ceria particles, magnesium silicate particles, calcium silicate particles, zinc oxide particles, antimony oxide particles, indium oxide particles, tin oxide particles, titanium oxide particles, iron oxide particles, magnesium oxide particles, aluminum hydroxide particles, magnesium hydroxide particles, potassium titanate particles, and barium titanate particles. For the metal oxide particles, one type of the metal oxide particles may be used alone or two or more types of the metal oxide particles may be used in combination. Among the above, the metal oxide particles are preferably at least one selected from silica particles, alumina particles, zirconia particles, magnesium oxide particles, and barium titanate particles in terms of improvement in thixotropy. The metal oxide particles are more preferably silica particles having a light weight and a small particle size.

When the silica particles are used as the metal oxide particles, the silica particles may either be wet silica particles or dry silica particles. The wet silica particles are exemplarily produced through a sedimentation method (neutralization reaction of sodium silicate and mineral acid), a sol-gel method, or the like. Examples of the dry silica particles include silica particles produced through a combustion method (fumed silica particles), where a silane compound is combusted, and silica particles produced through a deflagration method, where metal silicon powder is deflagrated. When the silica particles are dry silica particles, moisture derived from the silica particles can be inhibited from being mixed. Degradation of the electrolyte is thus likely to be inhibited. Accordingly, in terms of inhibiting the degradation of the electrolyte, the silica particles are preferably dry silica particles, more preferably fumed silica particles.

In the present exemplary embodiment, assuming that the total content of the electrolyte solution and the ion conductive polymer is 100 parts by mass, the content of the metal oxide particles is preferably in a range from 3 parts by mass to 30 parts by mass. Further, in terms of easily providing a membrane from the solid electrolyte, the content of the metal oxide particles is preferably 4 parts by mass or more, more preferably 5 parts by mass or more. In terms of the improvement in the lithium-ion transport number and ion conductivity, the content of the metal oxide particles is preferably 25 parts by mass or less, more preferably 20 parts by mass or less.

The solid electrolyte according to the present exemplary embodiment contains the electrolyte solution containing the above lithium salt and the carbonate solvent, the metal oxide particles, and the ion conductive polymer according

to the present exemplary embodiment. The solid electrolyte according to the exemplary embodiment may contain any other component unless an object of the invention is impaired.

Manufacturing Method of Solid Electrolyte

A manufacturing method of the solid electrolyte according to the present exemplary embodiment will be described below.

The manufacturing method of the solid electrolyte according to the present exemplary embodiment includes steps described below:

mixing the electrolyte solution, the metal oxide particles, the cross-linked polyether, and the photopolymerization initiator to prepare a mixture (Step 1);
molding the mixture to produce a molded product (Step 2); and
irradiating the molded product with ultraviolet rays to produce the solid electrolyte containing the ion conductive polymer produced by cross-linking the cross-linked polyether (Step 3).

The electrolyte solution contains the lithium salt and the carbonate solvent. The solid electrolyte contains the electrolyte solution, the metal oxide particles, and the ion conductive polymer, where, assuming that the total content of the electrolyte solution and the ion conductive polymer is 100 mass%, the content of the electrolyte solution is in a range from 87 mass% to 93 mass% and the content of the ion conductive polymer is in a range from 7 mass% to 13 mass%.

According to the manufacturing method of the solid electrolyte of the present exemplary embodiment, a solid electrolyte exhibiting excellent lithium-ion transport number, ion conductivity, and stability to lithium metal can be obtained. Further, according to the manufacturing method of the solid electrolyte according to the present exemplary embodiment, since the cross-linked product of the cross-linked polyether is used as the ion conductive polymer, moldability for producing the solid electrolyte can be improved. The reason for the improvement in moldability is assumed as follows. According to the manufacturing method of the solid electrolyte of the present exemplary embodiment, the solid electrolyte can be easily produced without applying a strong shear force when raw materials of the solid electrolyte are mixed. The moldability can thus be improved by the manufacturing method of the solid electrolyte according to the present exemplary embodiment.

Step 1

In Step 1, the raw materials for producing the solid electrolyte are mixed to prepare a mixture. In Step 1, first, the raw materials for producing the solid electrolyte, that is, the above-described electrolyte solution containing the lithium salt and the carbonate solvent, the above-described metal oxide particles, and the cross-linked polyether described in the above-described ion conductive polymer, and the photopolymerization initiator, are each prepared. Then, a target amount of each of the prepared raw materials is weighed. After that, the weighed raw materials are mixed to prepare the mixture. The mixture may be prepared by agitating the raw materials using a known agitator or the like. The mixture prepared in Step 1 is the mixture for providing the solid electrolyte.

In Step 1, the electrolyte solution, the metal oxide particles, the cross-linked polyether, and the photopolymerization initiator are mixed, for instance, at the following ratio.

Assuming that the total content of the electrolyte solution and the ion conductive polymer (cross-linked polyether) is 100 mass%, it is necessary that the content of the electrolyte solution is in a range from 87 mass% to 93 mass% and the content of the ion conductive polymer is in a range from 7 mass% to 13 mass%.

The content of the photopolymerization initiator is preferably in a range from 0.1 parts by mass to 10 parts by mass with respect to 100 parts by mass of the ion conductive polymer.

Assuming that the total content of the electrolyte solution and the ion conductive polymer is 100 parts by mass, the content of the metal oxide particles is preferably in a range from 3 parts by mass to 30 parts by mass.

Step 2

Step 2 is a step for producing the molded product from the mixture prepared in Step 1. In Step 2, the mixture prepared in Step 1 is molded to a molded product. How to mold the mixture is not particularly limited, and the molding may be performed, for instance, by coating a surface of a support with the mixture to form a coating film. Alternatively, the mixture may be molded through compression molding using a molding die with mold releasability. The molding die with releasability may be a mold-release film subjected to mold-release treatment on a surface thereof.

Step 3

Step 3 is a step for producing the solid electrolyte from the molded product prepared in Step 2. In Step 3, the molded product prepared in Step 2 is irradiated with ultraviolet rays to cross-link the cross-linked polyether to provide the ion conductive polymer, which is the cross-linked product of the cross-linked polyether. Then, the solid electrolyte containing the above-described electrolyte solution, the above-described metal oxide particles, and the above-described ion conductive polymer is produced. A device to emit ultraviolet rays to the molded product is not particularly limited, and any device by which the cross-linked polyether is cross-linked is usable. For instance, the device for UV irradiation may be a device with an ultraviolet LED lamp, a device with a high-pressure mercury lamp, or a device with a metal halide lamp.
The conditions under which the molded product is irradiated with ultraviolet rays (UV) are not particularly limited, and any conditions under which the cross-linked polyether is cross-linked are adoptable. The maximum illuminance and cumulative light intensity for ultraviolet irradiation are exemplified as follows. The maximum illuminance may be, for instance, 5 $mW/cm^2$ or more, 10 $mW/cm^2$ or more, or 50 $mW/cm^2$ or more. Further, the maximum illuminance may be 1,000 $mW/cm^2$ or less, 700 $mW/cm^2$ or less, or 500 $mW/cm^2$ or less. The cumulative light intensity may be, for instance, 50 $mJ/cm^2$ or more, 100 $mJ/cm^2$ or more, or 500 $mJ/cm^2$ or more. Further, the cumulative light intensity may be 5,000 $mJ/cm^2$ or less, 3,000 $mJ/cm^2$ or less, or 2,000 $mJ/cm^2$ or less.
Through the Step 1, Step 2, and Step 3 described above, the solid electrolyte according to the present exemplary embodiment is produced.

Battery

A battery according to the present exemplary embodiment will be described below.
The battery according to the exemplary embodiment includes the solid electrolyte according to the present exemplary embodiment. In the present exemplary embodiment, it is preferable that the solid electrolyte according to the present exemplary embodiment is provided as a constituent material of an electrolyte layer of the battery. The battery includes an anode, a cathode, and an electrolyte layer disposed between the anode and the cathode. Such an arrangement results in a battery excellent in a variety of properties. The battery is preferably a secondary battery, more preferably a lithium-ion secondary battery. Various members of the lithium-ion secondary battery according to the present exemplary embodiment are not particularly limited and, for instance, any materials typically usable for a battery are usable.
It should be noted that the invention is not limited to the exemplary embodiment and modifications, improvements, etc. are within the scope of the invention as long as an object of the invention is achievable.

Examples

A further detailed description will be made below on the invention with reference to Examples; however, the invention is by no means limited to these Examples. The measurement and evaluation in Examples and Comparatives below were performed by methods below.

Measurement of Ion Conductivity of Solid Electrolyte

A circular piece of 6-mm diameter, which was cut out from a solid electrolyte membrane, was held between two electrodes in a form of stainless plates to measure impedance between the stainless plates. For the measurement, an alternating-current impedance method was used, in which an alternating current (an application voltage: 10 mV) was applied to between the electrodes and a resistance component was measured. The ion conductivity was calculated from a real impedance intercept of a thus-obtained Cole-Cole plot. It should be noted that a potentiostat/galvanostat (VMP-300 manufactured by BioLogic) was used for the measurement.
The ion conductivity ($\sigma_A$) was calculated according to a numerical formula (F1) below.

$$\sigma_A = L_A/(R_A \times S_A) \ldots (F1)$$

In the numerical formula (F1), $\sigma_A$ represents an ion conductivity (unit: $S \cdot cm^{-1}$), $R_A$ represents a resistance (unit: $\Omega$), $S_A$ represents a cross-sectional area of the solid electrolyte membrane at the time of the measurement (unit: $cm^2$), and $L_A$ represents a distance between the electrodes (unit: cm).
The measurement temperature is 25 degrees C. The ion conductivity ($\sigma_A$) was calculated from a measurement result of a complex impedance.

Measurement of Ion Conductivity of Electrolyte Solution

A 19-mm-diameter circular mesh cloth ($\alpha$-UX SCREEN 150-035/380TW, manufactured by NBC Meshtec Inc.) was used as a separator. The separator was then impregnated with an electrolyte solution, in which the lithium salt and the carbonate solvent to be used in Examples and Comparatives were blended in accordance with a predetermined formulation, and held between two 16-mm-diameter stainless steel plates serving as electrodes. The impedance between the stainless steel plates was then measured. For the measurement, an alternating-current impedance method was used, in which an alternating current (an application voltage: 10 mV) was applied to between the electrodes and a resistance component was measured. The ion conductivity was calculated from a real impedance intercept of a thus-obtained Cole-Cole plot. It should be noted that a potentiostat/galvanostat (VMP-300 manufactured by BioLogic) was used for the measurement.

The ion conductivity ($\sigma_B$) was calculated according to a numerical formula (F2) below.

$$\sigma_B = L_B/(R_B \times S_B) \ldots (F2)$$

In the numerical formula (F2), $\sigma_B$ represents an ion conductivity (unit: $S \cdot cm^{-1}$), $R_B$ represents a resistance (unit: $\Omega$), $S_B$ represents a cross-sectional area of the electrodes (unit: $cm^2$), and $L_B$ represents a distance between the electrodes (unit: cm).

The measurement temperature is 25 degrees C. The ion conductivity ($\sigma_B$) was calculated from a measurement result of a complex impedance.

Evaluation of Stability to Lithium Metal (Dissolution/Precipitation Test)

A circular piece of 19-mm diameter, which was cut out from a solid electrolyte membrane, was held between two lithium metal pieces serving as electrodes to form a lithium symmetric cell. The diameter of the lithium metal electrodes was 16 mm. At a temperature of 25 degrees C, a current density was set at 3 $mA/cm^2$. After an oxidation current was applied until reaching 3 $mAh/cm^2$, a reduction current was applied until reaching 3 $mAh/cm^2$. This series of processes was repeated for 200 cycles, and a change in voltage after the 200 cycles was measured. Through the voltage measurement, the dissolution and precipitation behavior of lithium metal was examined. It can be confirmed that the stability to lithium metal is achieved in a case where the process of dissolution and precipitation is repeated at a constant voltage without causing short-circuit or the like. Assuming that the number of cycles working at an electric potential $\pm$20 mV from the voltage of an initial cycle was defined as the number of stable working cycles, and the stability to lithium metal in respective examples was compared.

Measurement of Lithium-ion Transport Number

**[0065]** A circular piece of 6-mm diameter, which was cut out from the obtained solid electrolyte membrane, was held between two electrodes in a form of lithium plates to produce a cell. The cell was then connected to a potentiostat/galvanostat (VMP-300 manufactured by BioLogic) and measurement was started after the elapse of 2 hours or more at 25 degrees C. In the measurement, complex impedance measurement was performed first. After a resistance value ($R_0$) was calculated, a voltage of 30 mV was applied to perform direct-current polarization measurement. An initial current value ($I_0$) and a stationary current value ($I_S$) of which current value was constant were measured. After the stationary current was checked, the complex impedance measurement was performed again and a resistance value (Rs) was calculated. The lithium-ion transport number (t+) was calculated according to a numerical formula (F3) below (the Evans formula).

$$t_+ = Is(\Delta V - I_0 \times R_0)/I_0(\Delta V - I_S \times R_S) \ldots (F3)$$

In the numerical formula (F3), $\Delta V$ represents an application voltage, and $R_0$, Rs, $I_0$, and Is are the same as above.

Example 1

Lithium-bis(fluorosulfonyl)imide (LiFSI) was prepared as the lithium salt. Dimethyl carbonate (DMC) was prepared as the carbonate solvent. Fumed silica particles (AEROSIL (registered trademark) 380, NIPPON AEROSIL CO., LTD., a specific surface area measured by the BET method: 350 $m^2/g$ - 410 $m^2/g$) were prepared as the metal oxide particles. As the cross-linked polyether for the ion conductive polymer, Alkox CP-A2H (manufactured by Meisei Chemical

Works, Ltd.) was prepared.

It should be noted that the specific surface area 350 $m^2/g$ - 410 $m^2/g$ represents that the specific surface area is in a range from 350 $m^2/g$ to 410 $m^2/g$. The same applies to other similar expressions below.

Lithium-bis(fluorosulfonyl)imide (LiFSI) and dimethyl carbonate (DMC) were weighed so that LiFSI/DMC = 1/2 in a molar ratio was satisfied, and thoroughly agitated to prepare an electrolyte solution. The prepared electrolyte solution and the ion conductive polymer (Alkox CP-A2H) were weighed so that 90/10 in a mass ratio was satisfied. After thoroughly mixing while heating to 70 degrees C, 2.5 parts by mass of 1-hydroxycyclohexylphenylketone was added to 100 parts by mass of the ion conductive polymer, which were thoroughly mixed to obtain a liquid mixture. Five parts by mass of fumed silica particles were added to 100 parts by mass of the obtained liquid mixture, which was thoroughly mixed to obtain a mixture for forming a solid electrolyte membrane.

Subsequently, the mixture for forming a solid electrolyte membrane was subjected to compression molding on a mold-release film (manufactured by Lintec Corporation, product name "PET38AL-5") to have a thickness of 100 μm, thus obtaining a molded product. The molded product was subjected to ultraviolet (UV) irradiation [maximum illuminance: 180 $mW/cm^2$, cumulative light intensity: 1,000 $mJ/cm^2$, measured by a illuminance/light-intensity meter manufactured by EYE GRAPHICS CO.,LTD. (control unit: EYE UV METER UVPF-A2, light receiver: EYE UV METER PD-365A2)] to cross-link the cross-linked polyether, thereby producing a solid electrolyte membrane that contained the ion conductive polymer containing the cross-linked product of the cross-linked polyether.

Comparative 1

It was attempted to form a solid electrolyte membrane as in Example 1 except that the prepared electrolyte solution and the ion conductive polymer (Alkox CP-A2H) were weighed so that 94/6 in a mass ratio was satisfied and 24 parts by mass of fumed silica particles were added to 100 parts by mass of the liquid mixture. However, no membrane was obtained.

Comparative 2

It was attempted to form a solid electrolyte membrane as in Example 1 except that the prepared electrolyte solution and the ion conductive polymer (Alkox CP-A2H) were weighed so that 95/5 in a mass ratio was satisfied and 5 parts by mass of fumed silica particles were added to 100 parts by mass of the liquid mixture. However, no membrane was obtained.

Comparative 3

A solid electrolyte membrane was obtained as in Example 1 except that the prepared electrolyte solution and the ion conductive polymer (Alkox CP-A2H) were weighed so that 86/14 in a mass ratio was satisfied and 5 parts by mass of fumed silica particles were added to 100 parts by mass of the liquid mixture.

Comparative 4

It was attempted to form a solid electrolyte membrane as in Example 1 except that the prepared electrolyte solution and the ion conductive polymer (Alkox CP-A2H) were weighed so that 91/9 in a mass ratio was satisfied and no fumed silica particles were added to 100 parts by mass of the liquid mixture. However, no membrane was obtained.

Comparative 5

It was attempted to form a solid electrolyte membrane as in Example 1 except that the prepared electrolyte solution and the ion conductive polymer (Alkox CP-A2H) were weighed so that 95/5 in a mass ratio was satisfied and 13 parts by mass of fumed silica particles were added to 100 parts by mass of the liquid mixture. However, no membrane was obtained.

Comparative 6

It was attempted to form a solid electrolyte membrane as in Example 1 except that the prepared electrolyte solution and the ion conductive polymer (Alkox CP-A2H) were weighed so that 97/3 in a mass ratio was satisfied and 18 parts by mass of fumed silica particles were added to 100 parts by mass of the liquid mixture. However, no membrane was obtained.

Comparative 7

Lithium-bis(fluorosulfonyl)imide (LiFSI) was prepared as the lithium salt. Tetraethylene glycol dimethyl ether (G4) was prepared as a solvent. Fumed silica particles (AEROSIL (registered trademark) 380, NIPPON AEROSIL CO., LTD., a specific surface area measured by the BET method: 350 $m^2/g$ - 410 $m^2/g$) were prepared as the metal oxide particles. Polytetrafluoroethylene (PTFE) was prepared as a binder.

Lithium-bis(fluorosulfonyl)imide (LiFSI) and tetraethylene glycol dimethyl ether (G4) were weighed so that LiFSI/G4 = 1/1 in a molar ratio was satisfied, and thoroughly agitated to prepare an electrolyte solution. Next, the electrolyte solution and the fumed silica particles were weighed so as to achieve electrolyte solution/fumed silica particles = 95/5 in a mass ratio and thoroughly mixed. Further, 10 parts by mass of polytetrafluoroethylene (PTFE) was added to the total 100 parts by mass of the electrolyte solution and the fumed silica particles, and thoroughly mixed using an agate mortar. Then, it was attempted to form a solid electrolyte membrane by causing the mixture to be subjected to compression molding on a fluororesin mold. However, no membrane was obtained. It should be noted that the mass ratio of the electrolyte solution to the binder in the solid electrolyte membrane was 90/10, and a filler additive amount was 5 parts by mass with respect to 100 parts by mass of the mixture of the electrolyte solution and the binder.

Comparative 8

Lithium-bis(fluorosulfonyl)imide (LiFSI) was prepared as the lithium salt. Tetraethylene glycol dimethyl ether (G4) was prepared as a solvent. Fumed silica particles (AEROSIL (registered trademark) 380, NIPPON AEROSIL CO., LTD., a specific surface area measured by the BET method: 350 $m^2/g$ - 410 $m^2/g$) were prepared as the metal oxide particles. Polytetrafluoroethylene (PTFE) was prepared as a binder.

Lithium-bis(fluorosulfonyl)imide (LiFSI) and tetraethylene glycol dimethyl ether (G4) were weighed so that LiFSI/G4 = 1/1 in a molar ratio was satisfied, and thoroughly agitated to prepare an electrolyte solution. Next, the electrolyte solution and the fumed silica particles were weighed so as to achieve electrolyte solution/fumed silica particles = 80/20 in a mass ratio and thoroughly mixed. Further, 5 parts by mass of polytetrafluoroethylene (PTFE) was added to the total 100 parts by mass of the electrolyte solution and the fumed silica particles, and thoroughly mixed using an agate mortar. The mixture was then subjected to compression molding on a fluororesin mold, thereby obtaining a solid electrolyte membrane. It should be noted that the mass ratio of the electrolyte solution to the binder in the solid electrolyte membrane was 94/6, and a filler additive amount was 24 parts by mass with respect to 100 parts by mass of the mixture of the electrolyte solution and the binder.

Comparative 9

Polytetrafluoroethylene (PTFE) was prepared as a binder. Further, an electrolyte solution was prepared as in Example 1.

The prepared electrolyte solution and the fumed silica particles were weighed so as to achieve electrolyte solution/fumed silica particles = 80/20 in a mass ratio and thoroughly mixed. Further, 5 parts by mass of polytetrafluoroethylene (PTFE) was added to the total 100 parts by mass of the electrolyte solution and the fumed silica particles, and thoroughly mixed using an agate mortar. After that, the solid electrolyte membrane was obtained as in Example 1 except that the above mixture was subjected to compression molding on a fluororesin mold. It should be noted that the mass ratio of the electrolyte solution to the binder in the solid electrolyte membrane was 94/6, and a filler additive amount was 24 parts by mass with respect to 100 parts by mass of the mixture of the electrolyte solution and the binder.

Evaluation of Solid Electrolyte

The above-described dissolution/precipitation test, ion conductivity measurement, and lithium-ion transport number measurement were performed on the solid electrolyte membranes in Example 1 and Comparatives 1, 3, 8, and 9. Further, the ion conductivity measurement was performed on the above-described electrolyte solution in Example 1 and Comparatives 1, 3, 8, and 9.

Table 1 shows compositions of solid electrolyte membranes in respective examples. Table 2 shows measurement results of the dissolution/precipitation test, ion conductivity measurement, and the lithium-ion transport number measurement. In Table 1, Li salt represents the lithium salt and Solvent represents the carbonate solvent.

Table 1

| | Solid Electrolyte | | | | | | | | |
|---|---|---|---|---|---|---|---|---|---|
| | Li Salt | Solvent | Li Salt/ Solvent | Metal Oxide Particles (Filler) | | Ion Conductive Polymer or Binder | Electrolyte Solution/ Ion Conductive Polymer or Binder | | Filler |
| | Type | Type | Molar Ratio | Type | Specific Surface Area | Type | Mass% | | Parts by Mass |
| | | | | | $m^2/g$ | | Electrolyte Solution | Ion Conductive Polymer or Binder | |
| Ex. 1 | LiFSI | DMC | 112 | AEROSIL380 | 350-410 | Alkox CP-A2H | 90 | 10 | 5 |
| Comp. 1 | LiFSI | DMC | 112 | AEROSIL380 | 350-410 | Alkox CP-A2H | 94 | 6 | 24 |
| Comp. 2 | LiFSI | DMC | 112 | AEROSIL380 | 350-410 | Alkox CP-A2H | 95 | 5 | 5 |
| Comp. 3 | LiFSI | DMC | 112 | AEROSIL380 | 350-410 | Alkox CP-A2H | 86 | 14 | 5 |
| Comp. 4 | LiFSI | DMC | 112 | AEROSIL380 | 350-410 | Alkox CP-A2H | 91 | 9 | 0 |
| Comp. 5 | LiFSI | DMC | 112 | AEROSIL380 | 350-410 | Alkox CP-A2H | 95 | 5 | 13 |
| Comp. 6 | LiFSI | DMC | 112 | AEROSIL380 | 350-410 | Alkox CP-A2H | 97 | 3 | 18 |
| Comp. 7 | LiFSI | G4 | 111 | AEROSIL380 | 350-410 | PTFE | 90 | 10 | 5 |
| Comp. 8 | LiFSI | G4 | 111 | AEROSIL380 | 350-410 | PTFE | 94 | 6 | 24 |
| Comp. 9 | LiFSI | DMC | 112 | AEROSIL380 | 350-410 | PTFE | 94 | 6 | 24 |

Table 2

| | Evaluation Results | | | |
|---|---|---|---|---|
| | Dissolution/ Precipitation Test | Ion Conductivity $\sigma_A$(at 25°C) | Ion Conductivity $\sigma_B$(at 25°C) | Lithium-Ion Transport Number |
| | Number of Cycles | Solid Electrolyte Membrane | Electrolyte Solution + Separator | |
| | | S/cm | S/cm | |
| Ex. 1 | > 200 | $1.0\times10^{-3}$ | $7.1\times10^{-4}$ | 0.83 |
| Comp. 1 | No Membrane produced | | | |
| Comp. 2 | No Membrane produced | | | |
| Comp. 3 | > 200 | $3.7\times10^{-4}$ | $7.1\times10^{-4}$ | 0.74 |
| Comp. 4 | No Membrane produced | | | |
| Comp. 5 | No Membrane produced | | | |
| Comp. 6 | No Membrane produced | | | |
| Comp. 7 | No Membrane produced | | | |
| Comp. 8 | 1 | $4.6\times10^{-4}$ | $2.3\times10^{-5}$ | 0.35 |
| Comp. 9 | 4 | $8.2\times10^{-4}$ | $7.1\times10^{-4}$ | 0.83 |

The results of the dissolution/precipitation test reveal that Example 1 achieved stable working through more than 200 cycles. In contrast, the number of cycles was less than 200 in Comparatives 8 and 9. In Comparatives 8 and 9, voltage rose as the number of cycles increased, failing to achieve stable working.

Further, the results of the ion conductivity reveal that the ion conductivity of in Example 1 was higher than those of respective Comparatives.

The results of the lithium-ion transport number reveal that Example 1 had a lithium-ion transport number exceeding 0.5. Typically, an electrolyte solution of an ionic liquid system tends to exhibit a small lithium-ion transport number. For instance, the lithium-ion transport number of an electrolyte solution of an ionic liquid system is 0.5 or less. The lithium-ion transport number of Comparative 8 was 0.35. It is thus understood that the solid electrolyte of Example 1 was superior in terms of the lithium-ion transport number.

From the above, it was found that the solid electrolyte membrane produced in Example 1 was easily formed into a membrane. Further, it was found that the solid electrolyte membrane in Example 1 was superior to the solid electrolyte membrane in Comparative 8 in terms of the lithium-ion transport number, the ion conductivity, and the stability to lithium metal. From the above, it is confirmed that the solid electrolyte according to the invention is capable of being easily formed into a membrane and exhibits excellent lithium-ion transport number, ion conductivity, and stability to lithium metal.

## Claims

**1.** A solid electrolyte comprising:

an electrolyte solution comprising a lithium salt and a carbonate solvent;

metal oxide particles; and
an ion conductive polymer, wherein
the ion conductive polymer comprises a cross-linked product of a cross-linked polyether, and
assuming that a total content of the electrolyte solution and the ion conductive polymer is 100 mass%, a content of the electrolyte solution is in a range from 87 mass% to 93 mass% and
a content of the ion conductive polymer is in a range from 7 mass% to 13 mass%.

**2.** The solid electrolyte according to claim 1, wherein
a molar ratio of the lithium salt to the carbonate solvent (lithium salt/carbonate solvent) in the electrolyte solution is in a range from 1/4 to 1/1.

**3.** The solid electrolyte according to claim 1, wherein
assuming that the total content of the electrolyte solution and the ion conductive polymer is 100 parts by mass, a content of the metal oxide particles is in a range from 3 parts by mass to 30 parts by mass.

**4.** The solid electrolyte according to claim 1, wherein
the lithium salt is at least one selected from the group consisting of lithium-bis(fluorosulfonyl)imide and lithium borofluoride.

**5.** The solid electrolyte according to any one of claims 1 to 4, wherein
the carbonate solvent is at least one selected from the group consisting of dimethyl carbonate and propylene carbonate.

**6.** The solid electrolyte according to any one of claims 1 to 4, wherein
the metal oxide particles are silica particles.

**7.** The solid electrolyte according to any one of claims 1 to 4, wherein
a specific surface area of the metal oxide particles measured by a BET method is in a range from 160 $m^2/g$ to 700 $m^2/g$.

**8.** A battery comprising the solid electrolyte according to any one of claims 1 to 4.

**9.** A manufacturing method of a solid electrolyte, the method comprising:

mixing an electrolyte solution, metal oxide particles, a cross-linked polyether, and a photopolymerization initiator to prepare a mixture;
molding the mixture to produce a molded product; and
irradiating the molded product with ultraviolet rays to produce a solid electrolyte comprising an ion conductive polymer produced by cross-linking the cross-linked polyether, wherein
the electrolyte solution comprises a lithium salt and a carbonate solvent,
the solid electrolyte comprises the electrolyte solution, the metal oxide particles, and the ion conductive polymer, and
assuming that a total content of the electrolyte solution and the ion conductive polymer is 100 mass%, a content of the electrolyte solution is in a range from 87 mass% to 93 mass% and
a content of the ion conductive polymer is in a range from 7 mass% to 13 mass%.

**INTERNATIONAL SEARCH REPORT**

International application No.
**PCT/JP2022/034001**

**A. CLASSIFICATION OF SUBJECT MATTER**

***H01B 1/06***(2006.01)i; ***H01B 13/00***(2006.01)i; ***H01M 6/18***(2006.01)i; ***H01M 10/056***(2010.01)i
FI: H01B1/06 A; H01M6/18 E; H01M10/056; H01B13/00 Z

According to International Patent Classification (IPC) or to both national classification and IPC

**B. FIELDS SEARCHED**

Minimum documentation searched (classification system followed by classification symbols)

H01B1/06; H01B13/00; H01M6/18; H01M10/056

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-306543 A (MATSUSHITA ELECTRIC INDUSTRIAL CO., LTD.) 28 November 1997 (1997-11-28)<br>entire text, all drawings | 1-9 |
| A | US 2019/0198923 A1 (SAMSUNG SDI CO., LTD.) 27 June 2019 (2019-06-27)<br>entire text, all drawings | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034001**

| Patent document cited in search report | Publication date (day/month/year) | Patent family member(s) | Publication date (day/month/year) |
|---|---|---|---|
| JP 9-306543 A | 28 November 1997 | (Family: none) | |
| US 2019/0198923 A1 | 27 June 2019 | WO 2018/038417 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017059432 A
- JP H06140052 A